# EUROPEAN PATENT APPLICATION

(11) **EP 3 348 887 A1**
(43) Date of publication of application: **18.07.2018**
(21) Application number: 18151093.4
(22) Date of filing: 10.01.2018
(51) Int. Cl.: F16L 1/036, F16L 1/09, E02F 3/36, E02F 3/96

(54) **PIPE PUSHER**

(30) Priority: 13.01.2017 GB 201700641
(71) Applicant: Stanton Bonna Concrete Ltd, Ilkeston, Derbyshire DE7 4QW (GB)
(72) Inventor: Taylor, Christopher, Derbyshire, DE7 4QW (GB)
(74) Representative: Adamson Jones

(57) **Abstract**

The present invention relates to the laying of pipes, in particular concrete drainage pipes comprising a string of connected pipe sections. A pipe pushing tool (26) is provided, comprising a connection head (28) and a unitary elongate beam (30). The connection head (28) comprises a connection (56) for a quick hitch coupling, and a channel for receiving the beam (30). The beam (30) is slidable within the channel so that the vertical position of the beam relative to the connection head (28) can be adjusted. Selectively engageable locating features (46,48,50,52) are provided to support the beam (30) in a plurality of predefined vertical positions relative to the connection head (28). The invention also provides an invertible connection head (28) for a tool, then connection head (28) comprising a connection (56) for a first quick hitch coupling at a first side of the connection head (28) and a connection (58) for a second quick hitch at a second side of the connection head (28) opposite the first side.

## Description

The present invention relates to the field of civil engineering or construction, and in particular to the laying of pipes such as concrete drainage pipes.

Concrete drainage pipes are commonly used in the construction industry. For ease of transportation, concrete pipes are pre-formed in sections of around 2.5m in length which have to be assembled, or 'jointed', on site. Typically, each pipe section has a spigot at one end and a socket at the other so that, when laid end to end, the spigot of one pipe section can engage with the socket of another.

In order to ensure a watertight seal between the adjacent pipe sections, gaskets are provided between the pipe sections, often integrated into the socket. During assembly of a length of pipe, a significant amount of force must be applied to each pipe section in order to force the spigot into an adjacent socket and compress the gasket to achieve the seal.

The size and weight of the pipe sections leads to problems with offloading and handling of the sections, and also to safety concerns for workers on the construction site. Additional safety concerns also arise when pipe sections are being forced together, especially for any workers near the joint being formed or the application of the force.

Specialist tools are known to assist with the lifting and general handling of pipe sections to address the problems that exist with offloading and positioning of pipe sections on site. However, none of these tools appropriately addresses the problem of pushing pipe sections together once laid in position.

Pipes are typically laid below ground level in pre-dug trenches, minimising access to the end of the pipe sections for pushing. In addition, many of the lifting and handling solutions either lack the capacity to apply a force to one end of a pipe section, or would cause damage to the end of the pipe section and/or gasket in doing so. Similar problems can arise when working with pipes formed from ductile metal (such as ductile iron pipes), plastic or clay. As a result, workers commonly joint pipes using the scoop/bucket of an excavator to apply a force to a length of timber positioned to protect the end of a pipe section.

The most significant problem with this approach is that it requires the length of timber to be held in place against the end of a pipe section while the bucket of the excavator is positioned and while the initial force is applied. This requires the presence of one or more workers in the region of the applied force, leading to a risk of pinch and trap injuries as the force is applied, and potentially more serious or fatal injuries in the event of the length of timber slipping or breaking under the applied load

There is a need, therefore, for a tool or device to assist with the jointing of pipe sections to simplify and improve the safety of the operation of laying a pipe.

According to a first aspect of the invention there is provided a pipe pusher as defined in the appended claim 1. Further advantageous features of the pipe pusher are recited in the associated dependent claims.

The pipe pushing tool comprises a connection head and a unitary elongate beam. The connection head comprises a connection for a quick hitch coupling at an upper side of the connection head and a channel for receiving the beam and orienting the length of the beam vertically during use. The beam is slidable within the channel so that the vertical position of the beam relative to the connection head can be adjusted. Selectively engageable locating features are provided to support the beam in a plurality of predefined vertical positions relative to the connection head.

Pipe sections are provided in a number of different diameters, and the trenches in which they are installed therefore also differ in width. According to manufacturers' advice, the best place to contact a pipe section for pushing home is the springing level (the central axis halfway down the joint). However, at this level, the width of the pipe section and of the trench both place limitations on the size of a tool, meaning that a large pushing tool, that would otherwise be suitable for pushing all diameters of pipe section, could not be used with smaller diameter pipe sections because it would not fit into the narrower trench width. A smaller tool solves this problem, but would likely be too narrow to bear on the walls of larger diameter pipe sections.

By providing a vertically arranged adjustable beam the present invention overcomes this problem. The beam may still be positioned across the full diameter of the pipe section, and because the beam is adjustable relative to the connection head the tool can remain balanced, with the pushing force aligned with the central axis of a pipe section, for a large variety of different diameter sections.

The connection for a quick hitch coupling may comprise a pair of spaced holes passing through the connection head for receiving rods. The holes may have a diameter of 70mm diameter. An additional hole, possibly of a different diameter such as 60mm, may also be provided through the connection head at the first side. The variety of holes allows for more than one configuration of rods to be used, meaning that the connection head can be used with more than one size or configuration of quick hitch. By providing holes for rods rather than permanent rods or bars, only the rods necessary for one particular configuration of quick hitch need be present at any one time, avoiding the potential for unused rods or bars to impede access during connection of a particular quick hitch. Additional holes for storing spare rods may also be provided in the connection head.

The connection head may also comprise a further connection for a different quick hitch coupling at a lower side of the head opposite the upper side. As with the first connection, holes may be provided for receiving rods and additional holes may be provided to give additional options. The sizes of the holes and/or their spacing may differ from the first connection. For example, holes of 80mm or 90mm diameter may be provided.

The locating features may comprise a plurality of holes through the beam and a locating pin with a diameter smaller than said holes and a length greater than the width of the channel. The locating pin may then be passed through the holes in the beam and rest on one end of the channel to support the weight of the beam. The locating features may further comprise a cut-out in at least one end of the channel to receive and locate the pin.

The plurality of holes may be provided along substantially the full length of the beam, or only a part, for example half, of the beam length.

The channel may not fully surround the cross-section of the beam. For example, the beam may be an 'I' or 'H' beam, one flange of the beam may not be enclosed by the channel.

Where the beam is an 'I' or 'H' beam, one end of the beam may be enclosed, for example by a plate extending across the beam cross-section, so that beam is prevented from passing fully through the channel in one direction. Both ends of the beam may be enclosed to prevent the beam from sliding out of the channel in either direction.

A buffer may be provided extending along the length of a surface of the beam opposite the connection head to protect the pipe during use of the pipe pusher. Alternatively, smaller buffers may be provided only at certain locations along the beam length. The or each buffer may comprise a length of wood or a rubber material.

The channel may comprise a pair of arms extending from a first end of the connection head, with one arm passing on each side of the beam to at least partially surround the beam cross-section. More than a single pair of arms, for example three pairs, may be provided to form the channel.

The pair of arms, or at least one pair of arms such as the central pair where more than one pair is provided, may comprise an aligned pair of holes which align with successive individual holes of the plurality of holes in the beam as the beam is moved vertically. A locking pin may then be used to further secure the beam in position relative to the connection head.

The versatility of the connection head, in particular its invertible nature, provides benefits for tools other than the pipe pusher as previously described. Accordingly, the invention also provides an invertible connection head for a tool as defined in the appended claim 16. Further beneficial features are defined in the associated dependent claims.

The connection head comprises a connection for a first quick hitch coupling at a first side of the connection head and a connection for a second, distinct, quick hitch at a second side of the connection head opposite the first side. Connections to two alternative quick hitches can therefore be provided simply by inverting the connection head.

The connections for the first and second quick hitch couplings may comprise first and second pairs of spaced holes through the connection head, at the first and second sides respectively, for receiving rods.

The spacing of the holes at the first pair of holes, at the first side of the connection head, may differ from the spacing of the second pair of holes, at the second side of the connection head.

One or more further holes may be provided through the connection head at the first and/or second sides to provide additional locations to receive rods allowing the use of further configurations of quick hitch. The one or more further holes may be provided adjacent one hole of the first and or second pair of holes, aligned with or off-set from the first and/or second pair of holes.

By providing holes for rods rather than permanent rods or bars, the rods necessary for an unused configuration will not impede access to the required rods for the quick hitch being used at any particular time.

The diameter of at least one hole at the first side of the connection head may differ from the diameter of at least one hole at the second side of the connection head to accommodate different rod diameters. For example, various hole diameters such as 60mm, 70mm, 80mm and/or 90mm may be provided.

The connections for the first and second quick hitch couplings may comprise first and second pairs of spaced rods or quick hitch pins permanently fixed at the first and second sides of the connection head respectively. Welding or otherwise fixing the rods/quick hitch pins permanently in place avoids the potential for incorrect selection of rods or bars for a particular use, but the invertible nature of the connection head would still allow connection to two different quick hitches. Each quick hitch head may be made with only the required rods/quick hitch pins for two particular quick hitches. Alternatively, a connection head as previously described may be provided, with a number of holes to receive rods, and only the necessary rods/quick hitch pins, once selected, could then be welded or otherwise secured in position.

The invertible connection head may form part of a pipe pushing tool as previously described.

Practicable embodiments of the invention are described in further detail below with reference to the accompanying drawings, of which:
Figure 1 is a perspective view of a typical section of concrete pipe;
Figure 2 is a schematic view of one commonly used method of jointing pipe sections;
Figure 3 is a perspective view of an example pipe pushing tool according to the present invention;
Figure 4 is a schematic side view of an alternative pipe pushing tool in accordance with the present invention; and
Figure 5 is a schematic cross-sectional view taken as indicated in Figure 4.

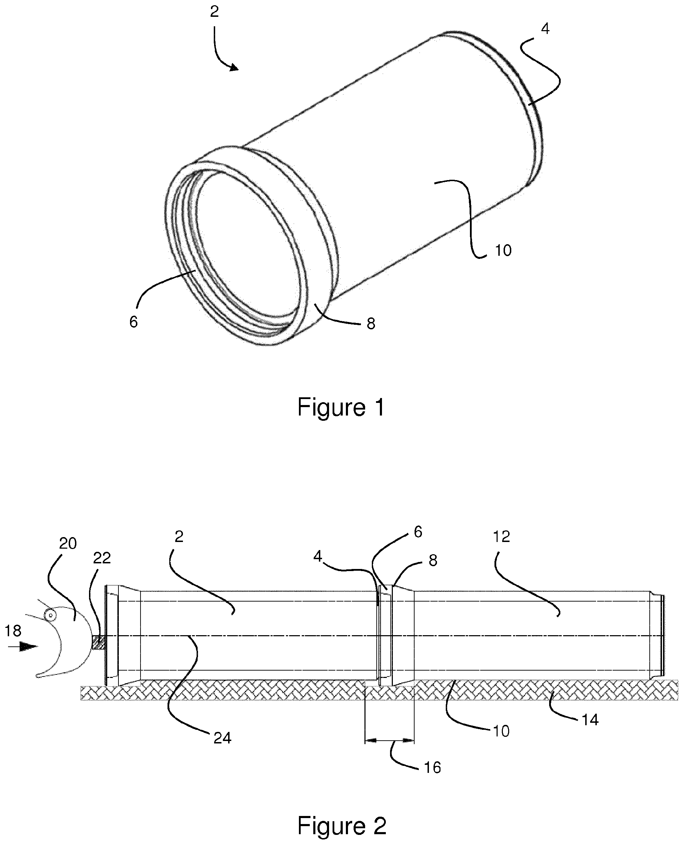

A typical pre-cast concrete pipe section 2 is shown in Figure 1. The section 2 is straight, and comprises a spigot 4 at one end and a socket 6 at the other to allow joints to be formed with similar adjacent pipe sections. The outer diameter of the end 8 of the pipe section surrounding the socket 6 is larger than the diameter of the main body 10 of the pipe section 2 so that the socket 6 can receive a spigot 4 of an adjacent pipe, and a sealing element/gasket, to form a joint.

Figure 2 shows one typical method of jointing pipe sections. For simplicity, only two pipe sections 2,12 are shown, but it will be understood that the same operation would be conducted repeatedly from the end of a growing chain of pipe sections in practice. In the example, both pipe sections 2,12 are essentially identical.

The first and second pipe sections 2,12 are shown in position resting on a bed 14 provided at the bottom of a trench in which the pipe is to be formed. Typically, the pipe sections 2,12 will be lowered into the trench using slings located around their diameters 10. Alternatively, the pipe sections may be provided with mounting points for lifting chains. Each pipe sections 2 is laid behind the existing section(s) 12 in a pre-dug trench, and is then pushed into engagement with the adjacent pipe section 12 to form a joint between the sections 2,12.

In Figure 2, the spigot 4 of the first pipe section 2 is shown received within the socket 6 of the second, previously laid, pipe section 12. The larger outer diameter 8 of the second pipe section 12 is received in a cut out 16 in the bed 14 of the trench. The cut out 16 helps to ensure correct alignment of the adjacent pipe sections 2,12 by ensuring that the main body 10 of each pipe rests flat on the bed 14. This helps to prevent the weight of the first pipe section 2 resting on, and possibly damaging, a gasket positioned between the two pipe sections. The cut out 16 also provides some resistance to movement of the second pipe section 12 along the trench.

To form the joint between the pipe sections 2,12, a force 18 is applied to the end of the first section 2 by an excavator scoop/bucket 20. A length of wood 22 is positioned between the bucket 20 and the first pipe section 2, spanning the central bore of the pipe section 2, to ensure that the bucket 20 does not cause damage to the socket 6 and/or gasket during the pushing operation.

The illustrated method of forming a joint is problematic, primarily because it typically requires one or more workers to hold the length of wood 22 in position across the end of a pipe section 2 while the initial pushing force 18 is applied by the excavator bucket 20. This puts these workers in a dangerous positon, particularly considering the magnitude of the forces typically involved. The relatively localised force applied by the excavator bucket 20 can also put an unsustainable and/or unbalanced load on the timber, leading to an increased risk of the length of wood 22 slipping or breaking under the applied force 18, increasing the risk to the workforce in or around the trench.

Other methods of forcing pipe sections 2,12 together for jointing are available, such as using a Tirfor or a bespoke hydraulic cylinder or pipe hook. Where mounting points are provided for chains, adjacent pipe sections can be connected by chains to a common hoist and drawn together by lifting the two sections simultaneously. However, these methods typically require additional large tools and/or are time consuming and/or risk damage to the ends of the pipe sections 2,12 or gaskets. Lifting two adjacent pipe sections 2,12 to draw them together has the additional disadvantage that the alignment between adjacent sections 2,12 will be lost or compromised during the operation. As a result, the method illustrated in Figure 2 remains common despite the obvious safety concerns.

Using the method shown in Figure 2, the applied force 18 can be oriented along the central axis 24 of the pipe being formed, at the springing level as recommended. This is often not the case with the alternative methods discussed above. In addition, the excavator used to apply the pushing force 18 will already be on site having been required to dig the trench.

A further problem is, however, presented by the finite width of the trench. In order to be correctly positioned as shown in Figure 2, a length of wood 22 must be long enough to fully span the diameter of the pipe 2, but not so long as to interfere with the sides of the trench. The difficulty in obtaining correctly sized lengths of wood 22 for all pipe diameters means that, in many cases, a compromise will be reached with a longer length of wood positioned at an angle that is not optimal and/or out of alignment with the central axis 24 of the pipe. This further increases the risk of serious accidents and injuries during the pipe joining operation.

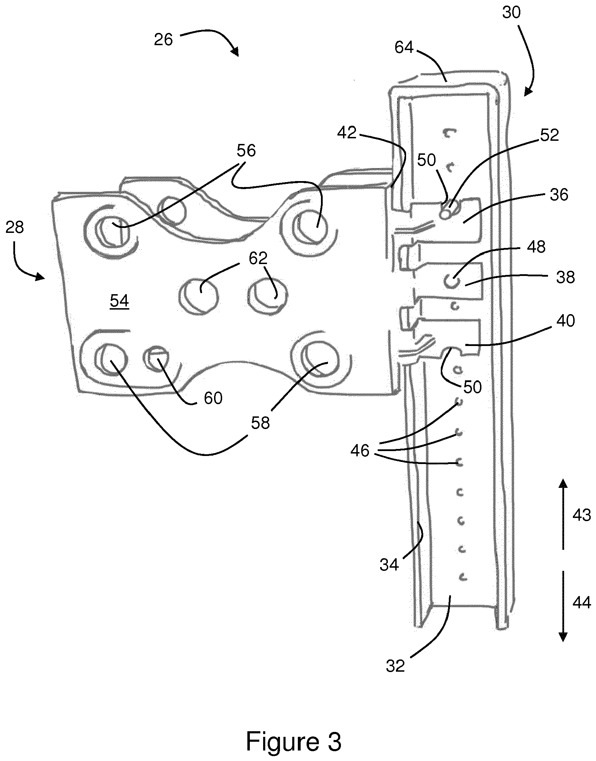

Figure 3 shows an example of a pipe pushing tool 26 according to the present invention. The tool 26 as illustrated comprises a connection head, or simply head, 28 and an 'I' section steel beam 30 of around 1200mm in length. The web 32 and one flange 34 of the beam 30 are located in a channel between three pairs of arms 36,38,40 extending from a first end 42 of the head 28 so that the beam 30 can slide vertically relative to the head 28 between the pairs of arms 36,38,40, as indicated at 43 and 44.

Fifteen holes 46 are provided along the centre of the web 32 of the beam 30 with their centres at consistent spacings of around 70mm. A hole 48 is also provided in each of the middle pair of arms 38, with semi-circular cut-outs 50 provided in the top edges of the upper pair of arms 36 and the bottom edges of the lower pair of arms 40. A locating pin 52 is shown passing though one of the holes 46 in the web 32 of the beam and resting on the cut-outs 50 of the upper pair of arms 38. The weight of the beam 30 can thereby be supported by the upper arms 36 when the head 28 is lifted in the direction of arrow 43.

The head 28 comprises a pair of spaced parallel plates 54 which extend at right angles from the first end 42 of the head 28. Each plate 54 has the same arrangement of holes 56,58,60,62 so that rods passed through the holes 56,58,60,62 will extend across between the plates 54 through the entire connection head 28. As illustrated, each plate 54 has a first pair of outer holes 56, each of 70mm diameter, located towards the top of the head 28 as shown, and a second pair of outer holes 58, each of 80mm diameter, located towards the bottom. A single outer hole 60 of 60mm diameter is provided adjacent one of the second pair of outer holes 58.

The outer holes 56,58,60 provided in the head receive rods that allow the head 28 to be attached to a conventional quick hitch or quick coupler as typically found on excavator arms. Various different sizes and designs of quick hitch are available. Ordinarily, this means that a quick hitch tool, such as an excavator bucket, can only be used with one particular design of quick hitch coupling.

A key aspect of the pipe pushing tool 26 of the present invention, and in particular of the head, is that it can be used either way up. As a result, it becomes possible to provide fixings for different quick hitches on a single tool.

As described above, the top of the head 28 as shown provides a first pair of holes 56 for rods of a 70mm diameter at a first spacing so that the tool 26 can be picked up by one design of quick hitch if oriented as shown in Figure 3. The bottom of the head 28 as shown provides second pair of holes 58 for 80mm diameter rods at a second, larger, spacing. It should be apparent that by inverting the tool 26, or simply the head 28, an alternative quick hitch would be able to pick up the same tool. The single outer hole 60 inside the second pair of outer holes provides another configuration option if required, when the head 28 is inverted. Using holes 56,58,60 to receive rods rather than permanently attaching rods or bars within the head 28 allows rods for only a particular quick hitch to be selectively inserted. This avoids the possible problem of rods or bars for an alternative quick hitch configuration interfering with or obstructing the quick hitch currently being used. For example, a permanently located rod or bar at the location of the single outer hole 60 would likely interfere with a quick hitch trying to engage with rods located in the second pair of outer holes 58. Two further central storage holes 62 are also provided in each plate 54 to receive spare pins that are not currently being used.

Clearly, in the inverted configuration the weight of the beam 30 can be supported by a locating pin 52 passing through a hole 46 in the beam 30 and resting in the cut-outs 50 in the lower arms 40 as shown in Figure 3.

This aspect of the invention is or great assistance where it may not be known in advance of a pipe jointing operation which particular size or design of quick hitch is available on any excavators or similar tools that are present on site. Instead of having to bring a number of different attachment heads to cope for the different designs, a single head 28 and tool 26 can be provided. This avoids additional tool costs, and reduces transport costs, set up time and/or possible delays while waiting for an excavator with a correctly sized quick hitch becomes available.

In use, the head 28 of the tool 26 is attached to the quick hitch of an excavator or similar, and the beam 30 is located to span the end of a pipe section 2 and transfer the force 18 from the excavator to the walls of the pipe section 2. Although not shown in Figure 3, a buffer of wood or similar material would be provided along the outer surface of the beam 30 to prevent the steel damaging the end of a pipe section 2 during use.

The holes 46 in the flange 32 of the beam 30 allow for vertical adjustment of the beam 30, and therefore allow the head 28 to be located at or around the central axis 24 of pipe sections 2 of different diameters for jointing. The beam 30 as shown can be used for pipes of less than 1200mm in diameter, and allows adjustment of the head 28 in steps of 70mm. The application of a force 18 can be approximately aligned with the central axis 24 of any diameter pipe section 2 up to the 1200mm maximum permitted by the beam length. It should be understood, however, that a longer beam 30 (for example of up to 1500mm, 2000mm, 2500mm or even 3000mm) could be provided to account for pipes of larger diameters up to, or even exceeding, 2800mm. Similarly, more holes 46 could be provided in the beam 30 at closer spacings (for example 60mm, 50mm, 40mm or less) to allow for more precise adjustment of the head, and therefore the point of application of the force 18. Alternatively, the spacing of the holes 46 in the beam 30 could be increased (for example to 80mm, 90mm, 100mm or more) should less precision be required.

As discussed above, the most preferred approach to applying the force would be to provide a horizontal beam, but problem the arise because the beam length for smaller diameter pipes is limited by the trench with, so alternative beams would be needed for larger pipe diameters. The vertical orientation of the beam 30 in the present invention still allows for the force to be applied across the full diameter of a pipe section 2, which is preferable to any significantly off/axis position, but allows for a single beam 30 to account for a wide range of pipe diameters. Any excess length of the beam 30 will simply extend vertically from the top of the trench during use.

Providing cut-outs 50 rather than holes in the upper and lower arms 36,40 provides a further advantage to the tool 26. Were the configuration of Figure 3 fixed, returning the tool 26 to the ground after a pipe pushing operation would cause the bottom end of the beam 30 to contact the ground significantly before the head 28. This could lead to difficulties in detaching the quick hitch and leave the tool 26 in an unstable position. However, because the beam 30 is restrained only by the interaction of the locating pin 52 with the cut-outs 50, and is otherwise free to slide through the pairs of arms 36,38,40, the head 28 of the tool 26 can move in the direction of arrow 44 once the beam 30 makes contact with the ground until eventually both the head 28 and beam 30 rest on the ground. This simplifies removal of the quick hitch and provides a much more stable configuration of the tool 26 when not in use, increasing safety for workers on site. The locating pin 52 can remain in position, or be moved to a different hole 46 in the beam 30 as required to relocate the beam 30 for a different diameter pipe section 2, ready for when the tool 26 is next picked up.

To further increase safety, the top of the beam 30 as shown in Figure 3 has an enclosed end 64 so that the beam 30 would not slide fully through the channel between the arms 36,38,40 even if the tool 26 were inadvertently picked up without a locating pin 52 in one of the holes 46 in the beam 30. This avoids the risk of an unconstrained beam 30 falling in such circumstances. The opposite end of the beam 30 is open in the illustrated embodiment so that the beam 30 can be lifted clear of the head 28 when it is required to turn the head 28 over for attachment to a different quick hitch. While removing the beam 30 simplifies the action of inverting the head 28, it would also be possible to enclose both ends of the beam 30 so that it could not be removed and invert the entire tool 26 when necessary to attach to a different size or design of quick hitch.

It should be understood that the beam 30 is held by arms 36,38,40 even if the locating pin 52 is lifted out of a cut-out 50, for example due to beam 30 hitting bottom of trench, during use. As such, a secure connection can be maintained without restricting vertical movement of the beam 30 during use. This may be beneficial in some situations, for example where there is an obstruction in the trench or where it is desired to apply a pushing force 18 at a location at a lower position than would otherwise be possible. Alternatively, there is the option of providing a further locating pin 52, or locking pin, in central hole 48 in arm 38 to provide additional security to the connection and prevent vertical movement of the beam 30 during use, even if the bottom of a trench is hit. This may assist in ensuring that the vertical location of the pushing force 18 remains aligned with the axis 24 of each of a series of pipe sections 2.

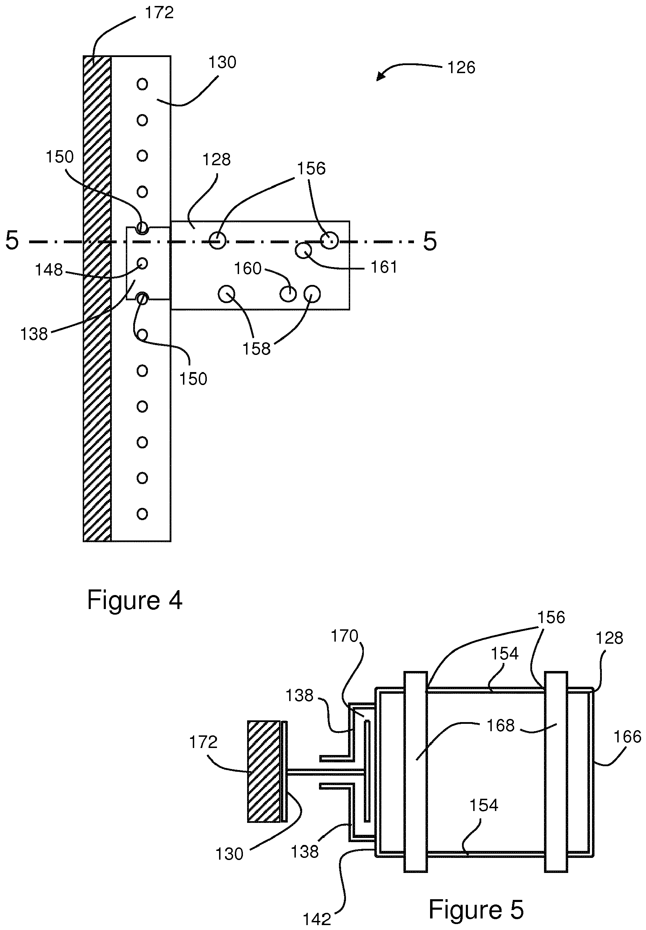

An alternative pipe pushing tool 126 according to the invention is shown schematically in Figures 4 and 5. In many respects, the alternative tool 126 of Figures 4 and 5 is similar in design and operation to the tool 26 of Figure 3, so the following description will concentrate on the differences.

In the side view of Figure 4 it can be seen that the head 128 of the alternative tool 126 again comprises differently spaced first and second pairs of outer holes 156,158 to receive rods and provide alternative quick hitch couplings on a single head. A single outer hole 160 is again provided inside the second pair of outer holes 158, but in contrast to the tool 26 of Figure 3 an additional single outer hole 161 is also provided inside the first pair of outer holes 156. The head 128 therefore provides connections for a total of four different quick hitches, two as shown in Figure 4 and a further two when inverted.

In Figure 4, the spacing of the first pair of outer holes 156 is greater than the second pair of outer holes 158, and the additional single outer hole 161 is not aligned with the first pair of outer holes. The head 128 shown in Figure 4 thus provides an alternative configuration to account for various different quick hitches, with rods being inserted into the appropriate holes as required. The central storage holes 62 of the Figure 3 tool 26, which are provided for the storage of spare/unused rods, are omitted from the alternative tool 126. It should be understood that further quick hitch configurations could be accommodated by adding or modifying one or more outer holes 156,158, and that additional storage holes 62, perhaps of varying sizes, can be provided for additional spare rods as required.

The cross-sectional view of Figure 5 shows that the head 128 is closed at its second end 166 opposite its first end 142. A pair of rods 168 are also shown extending through the first pair of outer holes 156 and spanning the gap between the side plates 154. Figure 5 also shows the channel 170 formed by the arms 138 partly enclosing the beam 130.

Figure 4 shows that a single pair of arms 138 are provided to form the channel 170 through which the beam 130 can slide. A central hole 148 and two cut-outs 150 are provided in each arm 138 so that the tool 126 can be used as previously described, ie with the weight of the beam supported on a locating pin 52 resting in a cut-out 150 with the option of providing a further securing pin through central hole 148 if desired.

Finally, a wooden buffer 172 is shown extending along the entire length of the beam 130 to provide protection to a pipe section 2 during use of the tool 126.

The illustrated embodiments described above are provided by way of example only. A skilled reader would understand that various changes could be made without departing from the general inventive concept of the invention.

For example, alternative configurations of holes could be provided in the head 28,128, perhaps of different sizes such as 90mm, could be provided to allow the use of alternative and/or additional quick hitch sizes and designs. Indeed, the head may be provided with the necessary rods or bars welded or otherwise fixed permanently in place, to avoid the potential for errors when selecting the rods or bars to be used. This would, however, restrict the total number of quick hitch configurations that could be accommodated.

Alternatively, or additionally, the buffers 172 may not be formed from wood, but may comprise an alternative material such as a rubber or plastics material suitable to provide a contact surface less damaging than steel to the concrete, ductile metal, plastic or clay pipe sections.

Although shown and descried with an 'I' section beam 30, 130, it should be understood that alternative beams, for example a square section steel beam or box section, could be used if desired.

It should also be understood that the spacing of the holes 46 in the beam 30 need not be uniform. For example, a tighter spacing could be provided towards one or both ends of the beam 30 to allow smaller adjustment steps for smaller pipes, where the increments between pipe diameters may be smaller, with wider spacing between the holes 46 towards the middle of the beam 30 for larger pipes where the steps in pipe diameter may be larger. Alternatively, the spacing of the holes 46 may vary along the length of the beam, with the gaps selected based on all, or the most commonly used, pipe diameters to help insure alignment of the head with the axis of all pipe sections 2.

Finally, in embodiments where it is intended to remove the beam 30,130 from the head 28,128 before inverting the head 28,128, holes 46 need not be provided in the entire length of the beam 30,130. For example, holes 46 could be omitted from the upper half of the beam 30 as shown in Figure 3 if the head 28 is never to be located above the axis of a 1200mm pipe section 2, since adjustment of the head 28 to a position above the mid-point of the beam 30 would not be required.

The invention described above helps to provide safer operation when jointing pipes of all kinds, while making use of machinery, specifically an excavator, which will already be present on site.

Using the tool of the invention the jointing operation can be made faster and more efficient, and greater control can be provided over the applied force when jointing. If desired, a laser target can be placed in a pipe or pipe section so the excavator driver can adjust for line and level remotely.

Significantly, the need for workers to be present in or around the trench whilst jointing takes place is avoided. This both reduces required manpower and improves the safety of the workforce on site.

## Claims

1. A pipe pushing tool comprising a connection head and a unitary elongate beam;
wherein the connection head comprises a connection for a quick hitch coupling at an upper side of the connection head and a channel for receiving the beam and orienting the length of the beam vertically during use;
wherein the beam is slidable within the channel to adjust the vertical position of the beam relative to the connection head;
and further comprising selectively engageable locating features to support the beam in a plurality of predefined vertical positions relative to the connection head.

2. A pipe pushing tool according to any claim 1, wherein the connection for a quick hitch coupling comprises a pair of spaced holes passing through the connection head for receiving rods.

3. A pipe pushing tool according to any claim 1, wherein an additional hole is provided through the connection head at the first side.

4. A pipe pushing tool according to any preceding claim, wherein the connection head comprises a further connection for a different quick hitch coupling at a lower side of the head opposite the upper side.

5. A pipe pushing tool according to any preceding claim, wherein the locating features comprise a plurality of holes through the beam and a locating pin with a diameter smaller than said holes and a length greater than the width of the channel.

6. A pipe pushing tool according to claim 5, wherein the locating features comprise a cut-out in at least one end of the channel to receive the pin.

7. A pipe pushing tool according to any preceding claim, wherein the beam is an 'I' or 'H' beam, and wherein one flange of the beam is not enclosed by the channel.

8. A pipe pushing tool according to claim 6, wherein one end of the 'I' or 'H' beam is enclosed.

9. A pipe pushing tool according to any preceding claim, wherein the channel comprises a pair of arms extending from a first end of the connection head, wherein the pair of arms comprises an aligned pair of holes which align with successive individual holes of the plurality of holes in the beam as the beam is moved vertically.

10. An invertible connection head for a tool, the connection head comprising a connection for a first quick hitch coupling at a first side of the connection head and a connection for a second, distinct, quick hitch at a second side of the connection head opposite the first side.

11. An invertible connection head according to claim 10, wherein the connections for the first and second quick hitch couplings comprise first and second pairs of spaced holes through the connection head, at the first and second sides respectively, for receiving rods.

12. An invertible connection head according to claim 11, wherein the spacing of the first pair of holes differs from the spacing of the second pair of holes.

13. An invertible connection head according to claim 11 or 12, wherein a further hole is provided through the connection head at the first and/or second side.

14. An invertible connection head according to any of claims 11 to 13, wherein the diameter of at least one hole at the first side of the connection head differs from the diameter of at least one hole at the second side of the connection head.

15. A pipe pushing tool according to any of claims 1 to 9, comprising an invertible connection head according to any of claims 10 to 14.
